# FASCICULE DE BREVET EUROPEEN

(11) **EP 2 851 891 B1**
(45) Date de publication et mention de la délivrance du brevet: **06.12.2017**
(21) Numéro de dépôt: 14185858.9
(22) Date de dépôt: 22.09.2014
(51) Int. Cl.: G09B 21/00, G10L 15/22, G06F 3/16

(54) **Terminal mobile utilisateur et procédé de commande d'un tel terminal**
Mobiles Benutzerendgerät und Steuerverfahren eines solchen Endgeräts
Mobile user terminal and method for controlling such a terminal

(30) Priorité: 20.09.2013 FR 1359091
(43) Date de publication de la demande: 25.03.2015
(73) Titulaire: Kapsys, 06250 Mougins (FR)
(72) Inventeur: Hekimian, Aram, 06400 Cannes (FR); Descheres, Eric, 06250 Mougins (FR)
(74) Mandataire: Hautier, Nicolas

(56) Documents cités:
- US-A1- 2007 112 572
- US-A1- 2011 195 758
- US-A1- 2012 209 608
- US-A1- 2013 012 268
- US-A1- 2013 246 920
- KWANG B LEE ET AL: "The Design and Development of User Interfaces for Voice Application in Mobile Devices", INTERNATIONAL PROFESSIONAL COMMUNICATION CONFERENCE, 2006 IEEE, IEEE, PI, 1 octobre 2006 (2006-10-01), pages 308-320, XP031052082, ISBN: 978-0-7803-9777-4
- "Accessibility Programming Guide for iOS", , 16 February 2012 (2012-02-16), pages 1-29, XP055253641, Retrieved from the Internet: URL:https://web.archive.org/web/2013051403 0157/https://developer.apple.com/library/i os/documentation/UserExperience/Conceptual /iPhoneAccessibility/iPhoneAccessibility.p df [retrieved on 2016-02-29]

## Description

La présente invention porte sur un terminal utilisateur à commande vocale manipulé par son utilisateur ainsi que sur son procédé de commande vocale, le terminal utilisateur comprenant au moins un écran d'affichage d'interfaces graphiques utilisateurs. Ce terminal peut être mobile mais ceci n'est pas limitatif.

Un tel procédé permet notamment, mais pas uniquement, à une personne déficiente visuelle d'interagir par la voix avec un terminal utilisateur. Dans le cadre de la présente invention on qualifie de terminal utilisateur notamment un téléphone portable de type téléphone intelligent habituellement dénommé Smartphone ; un téléphone fixe sans fil par exemple de type DECT, acronyme de Digital Enhanced Cordless Telephone qui signifie en français Téléphone sans-fil numérique amélioré; un ordinateur portable, une tablette graphique, un assistant personnel numérique, habituellement désigné par son acronyme PDA etc.

La majorité des terminaux utilisateurs mobiles est peu facilement utilisable ou n'est pas utilisable par les malvoyants, ce qui limite leur utilisation pour cette communauté estimée à plus d'un million de personnes en France et 160 millions dans le monde. Ceci vaut aussi pour les personnes ayant des difficultés à utiliser un clavier ou des touches, par exemple des personnes handicapées manuellement ou des personnes du troisième âge.

Il est en effet d'usage que ces terminaux utilisateurs fonctionnent à l'aide d'une interface homme/machine essentiellement de façon visuelle, par l'écran, et tactile, par des touches virtuelles affichées sur l'écran tactile.

Ainsi, il est connu des terminaux utilisateurs mobiles qui sont à écran d'affichage d'interfaces graphiques utilisateurs. Ces interfaces graphiques utilisateurs aussi connues sous l'abréviation anglaise GUI pour « graphical user interface » forment un instrument de dialogue homme machine dans lequel les interfaces sont sous forme d'objets graphiques apparaissant lors d'un affichage d'écran du terminal, le plus fréquemment sous forme de pictogrammes.

Ces objets graphiques correspondent à des touches du terminal à actionner ou à des actions de navigation entre diverses interfaces graphiques. L'utilisateur peut ainsi imiter une manipulation physique d'une touche du terminal ou initier une action de navigation en pointant soit du doigt soit avec un dispositif de pointage l'objet graphique sélectionné. En sélectionnant d'un pointage une icône sur l'écran, l'utilisateur du terminal peut par exemple lancer une application, naviguer sur Internet, éditer un message, répondre à un appel, composer un numéro, etc. Avantageusement l'écran du terminal est un écran tactile sensible au contact du doigt de l'utilisateur ou d'un stylet manipulé par l'utilisateur.

Le résultat de certaines de ces actions peut provoquer l'affichage d'une nouvelle fenêtre d'écran proposant un nouvel ensemble d'actions, ce qui implique que l'utilisateur du terminal doit avoir la capacité de réponse à ce nouvel affichage et pouvoir effectuer les actions nouvelles requises.

L'usage de tels terminaux utilisateurs n'est pas accessible aux groupes de population précédemment mentionnés. Par exemple, pour utiliser les fonctionnalités offertes par un téléphone portable telles qu'un simple appel, l'utilisateur doit appuyer sur des touches, interpréter les messages sur l'écran mais aussi naviguer à travers les menus. La difficulté s'accroît avec des logiciels tels que la fonction SMS ou encore la fonction « courrier électronique » disponibles sur certains téléphones portables ou sur ordinateur. Ceci vaut pour de multiples applications présentes sur le terminal utilisateur.

Autant toutes ces opérations restent familières à une personne n'ayant pas de handicap, autant il présente un frein à son utilisation pour les groupes de population précédemment mentionnés.

Pour essayer de rendre disponible des terminaux utilisateurs à touches matérielles à ces groupes de personnes, il a été proposé d'augmenter la taille des touches afin que celles-ci soient plus accessibles à l'utilisateur. Ceci implique cependant un changement complet du terminal, ce qui augmente son prix et ses dimensions. De plus, les terminaux utilisateurs à touches matérielles sont de moins en moins répandus et remplacés par des terminaux utilisateurs à écran tactile.

Une autre proposition concernant notamment les téléphones portables a été d'ajouter un dispositif auxiliaire se branchant sur le téléphone, ce dispositif servant de répertoire. Le dispositif auxiliaire peut composer un numéro en fonction d'une commande vocale faite par l'utilisateur. Les numéros ont été préalablement enregistrés dans le dispositif auxiliaire aussi par commande vocale.

Ceci nécessite cependant la présence d'un dispositif auxiliaire et ne peut remplir que la fonction de répertoire et d'appel. Un tel dispositif ne permet pas d'accomplir diverses autres fonctions, par exemple celle du suivi de l'affichage d'une page Internet et de navigation dans cette page.

Enfin, il existe des applications pour téléphone intelligent qui sont préprogrammées pour pouvoir être commandées vocalement, par exemple pour permettre l'ouverture d'une liste de contacts, la sélection d'un contact, un appel, etc.

Ce type de solution est décrit dans les documents suivants par exemple US 2011 /195758.

L'inconvénient de telles applications est qu'un développement lourd est nécessaire pour que ces applications puissent être commandées par la voix. De telles applications à commande vocale sont donc en pratique relativement peu nombreuses. De plus, elles ne sont pas particulièrement adaptées pour les utilisateurs qui n'ont que leur voix pour commander leur téléphone, par exemple des malvoyants, des seniors, des handicapés manuels ou des malades avec une faible dextérité des doigts.

Une autre solution est décrite dans le document US2012/209608. Cette solution prévoit de construire une base de données de contrôle par la voix. Durant la phase de construction, l'utilisateur prononce vocalement le nom d'une application et sélectionne ensuite l'icône de l'application qu'il désire associer à ce nom prononcé vocalement. Ce type de solution est en pratique peu utilisée car la phase de construction de la base de données est relativement longue et fastidieuse.

D'autres solutions sont décrites dans les documents US 2013/012268 ou US 2013/246920.

Le problème à la base de la présente invention est de faciliter l'utilisation des terminaux utilisateurs pour les personnes ayant des difficultés à sélectionner précisément un bouton.

Pour cela, l'invention vise à apporter une solution pour faciliter le développement des applications commandables par la voix afin de faciliter leur diffusion.

A cet effet, on prévoit selon un mode de réalisation de l'invention un terminal utilisateur comprenant au moins un écran d'affichage d'interfaces graphiques utilisateurs, un système d'exploitation, au moins un moyen de capture d'un ordre vocal émis par l'utilisateur pour la commande d'un objet activable du terminal utilisateur, au moins une mémoire pour mémoriser au moins une base de données de commande, le terminal utilisateur étant configuré pour exécuter les étapes suivantes à l'aide d'au moins un microprocesseur intégré au terminal utilisateur:
- d'une part, à chaque affichage d'au moins une interface graphique sur l'écran du terminal utilisateur, identification des objets activables présents dans ladite au moins une interface graphique alors affichée, et pour chaque objet activable:
   - identification d'une donnée descriptive comprenant une donnée de localisation et une donnée textuelle de l'objet activable, la donnée de localisation de l'objet activable servant à la localisation de l'objet dans l'écran d'affichage,
   - enregistrement des données descriptives, en particulier des données de localisation, pour chaque objet activable dans ladite au moins une base de données,
   - génération de données phonétiques numérisées sur la base de la donnée textuelle de chaque objet activable,
   - enregistrement dans ladite au moins une base de données des données phonétiques numérisées de chaque objet activable,
   - d'autre part, suite à la capture de l'ordre vocal :
   - numérisation de l'ordre vocal reçu par le moyen de capture pour la commande d'un objet activable en un ordre vocal numérique,
   - comparaison dudit ordre vocal numérique avec les données phonétiques numérisées,
   - identification d'une donnée phonétique numérisée correspondante à l'ordre vocal numérique et récupération de la donnée de localisation associée à la donnée phonétique numérisée,
   - activation de l'objet activable associé à la localisation récupérée.

L'effet technique ainsi obtenu est de rendre possible l'activation d'un terminal utilisateur à écran d'affichage d'objets graphiques pour un utilisateur, par exemple un utilisateur déficient visuel ou dont les mouvements des mains sont limités en remplaçant la vue et le toucher de l'écran par la réception d'un message vocal émis par l'utilisateur, ceci directement dans le système d'exploitation du terminal.

L'utilisateur peut entrer un ordre vocal via un microphone ajouté ou déjà présent sur le terminal utilisateur. L'ordre vocal est reconnu par le terminal utilisateur, comparé à des textes phonétiques correspondant à divers objets graphiques et un objet activable est sélectionné pour être activé, ceci sans dispositif auxiliaire à ajouter au terminal utilisateur.

L'invention permet ainsi de commander par la voix n'importe qu'elle application logicielle qui affiche des interfaces graphiques. Ainsi, ces applications logicielles peuvent être parfaitement conventionnelles et peuvent ne pas avoir été développées pour être commandées par la voix. L'invention permet également de naviguer sur des pages internet ou dans n'importe quelle application téléchargée.

Par ailleurs, l'invention ne nécessite pas que l'utilisateur construise une base de données de contrôle par la voix préalablement à l'utilisation. La mise en place de l'invention est donc totalement transparente pour l'utilisateur.

L'activation de l'objet activable basée sur la donnée de localisation permet de réduire la durée nécessaire au traitement. L'invention est ainsi particulièrement bien adaptée pour un traitement en temps réel avec une très faible latence.

De manière facultative, l'invention comprend en outre au moins l'une quelconque des caractéristiques suivantes prises séparément ou en combinaison:
- la capture de l'ordre vocal est faite par une interface homme machine par commande vocale, ladite interface par commande vocale étant connectée au système d'exploitation du terminal utilisateur afin d'effectuer l'activation de l'objet associé.
- les étapes ci-dessus sont effectuées uniquement pour les objets activables. Les autres objets affichés à l'écran ne font pas l'objet de la succession d'étapes de l'invention.
- l'interface par commande vocale comprend deux bases de données, une première base de données mémorisant les données descriptives et une deuxième base de données mémorisant les données phonétiques numérisées en étant sous la forme d'un module de contexte dynamique.
- l'interface par commande vocale est connectée à une troisième base de données placée à distance de cette interface par commande vocale.
- la troisième base de données est associée, à un serveur qui communique avec l'interface par commande vocale via un réseau Internet, WiFi, 3G, 4G ou tout réseau filaire ou radio
- la comparaison de l'ordre vocal numérique avec les données phonétiques numérisées sauvegardées ainsi que l'identification d'une donnée phonétique numérisée sauvegardée dans l'interface par commande vocale est faite par un module de reconnaissance vocale. La génération d'une donnée phonétique numérisée sur la base de la donnée textuelle est faite par un générateur de contexte. Le module de reconnaissance vocale et le générateur de contexte étant intégré dans le terminal et de préférence incorporés dans l'interface par commande vocale.
- l'interface par commande vocale comprend un module de contexte statique regroupant les mots clés relatifs respectivement à chacun des objets activables, ledit module de contexte statique transmettant les mots clés au module de reconnaissance vocale.
- l'invention repose sur une reconnaissance vocale avec une contrainte de contexte. La phase de collecte des objets graphiques potentiellement activables et la phase de reconnaissance vocale sont liées. Elles sont dépendantes. Le système de reconnaissance vocale peut identifier un mot ou un ensemble de mots pouvant être exploités par un objet graphique.
- l'activation de l'objet est faite par un analyseur d'activation directement dans le système d'exploitation du terminal utilisateur en remplacement de l'activation directe de l'objet activable affiché sur l'écran du terminal utilisateur.
- le moyen de capture de l'ordre vocal est un microphone analogique, un module d'acquisition numérisant les signaux du microphone étant prévu dans l'interface par commande vocale entre le microphone et le module de reconnaissance vocale.
- le terminal utilisateur comprend une interface homme machine de vocalisation, cette interface de vocalisation étant connectée au système d'exploitation du terminal utilisateur.
- l'interface de vocalisation comprend un collecteur transmettant les données du système d'exploitation à un analyseur syntaxique pour l'identification des données descriptives pour chaque objet activable, au moins une base de données mémorisant les données descriptives étant intégrée dans l'interface de vocalisation.
- la base de données mémorisant les données descriptives est commune aux interfaces de vocalisation et par commande vocale.
- l'interface de vocalisation comprend au moins un des modules suivants : un module de filtrage des données textuelles spécifiques chacun à un objet activable supprimant les données textuelles déjà présentes dans un historique de textes, un module d'ordonnancement des données textuelles selon un ordre prédéterminé, un module de complément apportant pour chaque donnée textuelle un complément de texte si besoin est.
- l'interface de vocalisation comprend un vocalisateur préparant la donnée textuelle spécifique à chaque objet activable à une diffusion et un haut-parleur diffusant des données textuelles à destination de l'utilisateur.
- le terminal utilisateur comprend un moyen de sélection permettant de mettre en oeuvre soit un mode d'activation par ledit au moins un écran d'affichage d'interfaces graphiques utilisateurs ou soit un mode d'activation par commande vocale.
- pour le terminal utilisateur, ledit au moins un écran d'affichage est un écran tactile.
- il est prévu des interfaces homme machine matérielles sous la forme de boutons, touches (habituellement désignées en anglais par « hard key ») ou analogues, le moyen de sélection permettant de mettre en opération sélectivement la commande vocale, l'écran d'affichage d'interfaces graphiques utilisateurs ou les interfaces homme machine matérielles. Selon un mode de réalisation avantageux, le terminal utilisateur comporte à la fois : un écran tactile, un clavier à touches et une interface pour commande vocale.
- le terminal utilisateur est un téléphone portable, un téléphone intelligent, un ordinateur portable, une tablette, un ordinateur de poche du type PDA ou tout autre équipement disposant d'une interface homme/machine.

Selon un autre aspect, l'invention porte sur un terminal utilisateur comportant à la fois : un écran tactile, un clavier à touches et une interface pour commande vocale. On notera que l'interface pour commande vocale peut être similaire ou différente de celle décrite ci-dessus. L'écran tactile et le clavier à touches sont solidaires du terminal, de préférence en étant intégrés de manière inamovible au terminal. Par ailleurs, le terminal est configuré de manière à ce que chaque objet activable puisse être activé par l'un quelconque parmi l'écran tactile, le clavier à touches et l'interface pour commande vocale. A chaque instant, ces trois modes de commande sont disponibles et l'utilisateur peut choisir celui qu'il souhaite.

Dans le cadre de l'invention, on prévoit un procédé de commande par un ordre vocal émis par l'utilisateur d'une application logicielle exécutée sur un terminal utilisateur, le terminal étant muni d'un écran apte à afficher des interfaces graphiques utilisateurs, le procédé comprenant les étapes suivantes exécutées de manière informatisée par au moins un microprocesseur:
- d'une part, à chaque affichage d'une interface graphique sur l'écran du terminal utilisateur, identification des objets activables présents dans l'interface graphique alors affichée, les objets activables permettant le pilotage de l'application logicielle par l'utilisateur, et pour chaque objet activable :
   - identification d'une donnée descriptive comprenant une donnée de localisation et une donnée textuelle de l'objet activable, la donnée de localisation de l'objet activable servant à la localisation de l'objet dans l'écran d'affichage,

   - enregistrement des données descriptives pour chaque objet activable,
   - génération de données phonétiques numérisées sur la base de la donnée textuelle de chaque objet activable,
   - enregistrement des données phonétiques numérisées de chaque objet activable,
   - d'autre part, suite à la capture de l'ordre vocal :
   - numérisation de l'ordre vocal en un ordre vocal numérique,
   - comparaison de l'ordre vocal numérique avec les données phonétiques numérisées sauvegardées,
   - identification d'une donnée phonétique numérisée sauvegardée correspondante à l'ordre vocal numérique et récupération de la donnée de localisation associée à la donnée phonétique numérisée,
   - activation de l'objet associé à la localisation récupérée.

Avantageusement, les objets activables permettent la navigation entre différentes interfaces graphiques utilisateurs, l'édition d'au moins un texte dans une des interfaces graphiques utilisateurs ou sont relatifs à la commande d'une fonction du terminal utilisateur.

Avantageusement, les étapes ci-dessus sont effectuées uniquement pour les objets activables. Les autres objets affichés à l'écran ne font pas l'objet de la succession d'étapes de la méthode selon l'invention.

Selon un autre aspect, la présente invention porte sur un produit programme d'ordinateur ou sur un média non-transitoire lisible par un ordinateur, comprenant des instructions, qui lorsqu'elles sont effectuées par au moins un processeur, exécute les étapes du procédé selon l'invention mentionné ci-dessus. De manière avantageuse, toutes ces étapes sont effectuées par le terminal utilisateur.

Selon un mode de réalisation, le procédé est exécuté par une application logicielle téléchargeable sur le terminal par exemple depuis un réseau de communication. L'application peut également être installée sur le terminal lors de la fabrication de ce dernier.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'un mode de réalisation d'un terminal utilisateur à écran et touches par interaction vocale de l'utilisateur avec le terminal utilisateur conformément à la présente invention,
- la figure 2 est une représentation schématique d'un mode de réalisation de l'interface homme machine de vocalisation pouvant être utilisée dans le terminal utilisateur selon la présente invention,
- la figure 3 est une représentation schématique d'un mode de réalisation de l'interface par commande vocale pouvant être utilisée dans le terminal utilisateur selon la présente invention.
- les figures 4, 5 et 6 illustrent un terminal selon un mode de réalisation de l'invention sur lequel sont affichés différentes interfaces graphiques.

Dans ce qui va suivre, le terminal utilisateur à écran est illustré par un téléphone portable. Il est à garder à l'esprit que ceci n'est pas limitatif et que le terminal utilisateur peut être n'importe quel terminal utilisateur à écran présentant des interfaces graphiques utilisateurs, ce terminal pouvant aussi en complément présenter des touches matérielles. Une liste non limitative et purement illustrative de terminaux utilisateurs possibles a été précédemment mentionnée.

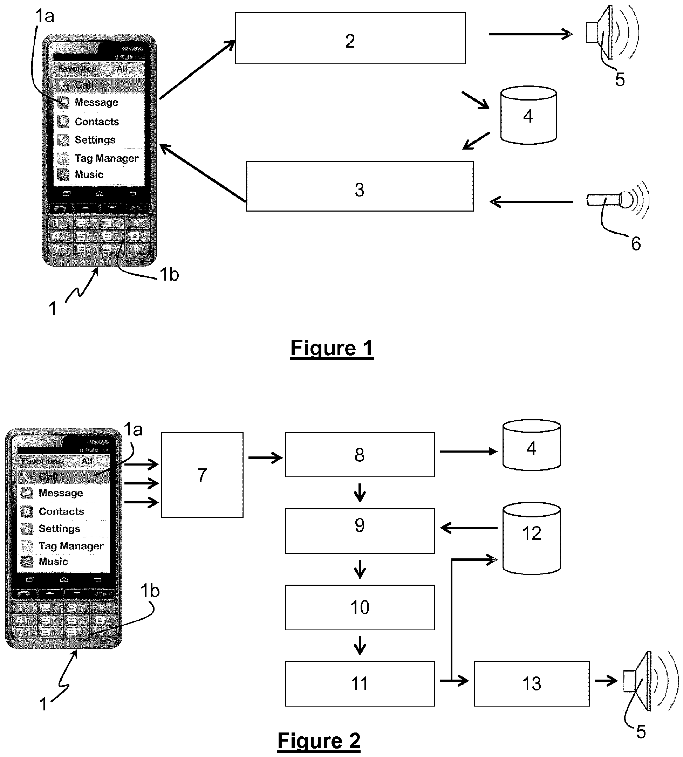

En regard de la figure 1, d'une manière générale, un terminal 1 utilisateur comprend au moins un écran 1a d'affichage d'interfaces graphiques utilisateurs, un système d'exploitation, au moins un moyen de capture 6 d'un ordre vocal émis par l'utilisateur pour effectuer une commande vocale. Le terminal 1 utilisateur comprend aussi au moins une base de données 4 de commande.

Selon la présente invention, le terminal 1 utilisateur est configuré pour exécuter les étapes suivantes qui s'articulent en deux groupes. Le premier groupe d'étapes, préalablement à l'ordre vocal, sert à l'identification et à la mémorisation des données concernant des objets activables présents sur le téléphone et illustrés par des représentations graphiques sur l'écran 1a du terminal 1 utilisateur et le deuxième groupe sert proprement dit à la commande vocale des objets activables.

Dans le premier groupe d'étapes, pour chaque affichage d'au moins une interface graphique sur l'écran 1a du terminal 1 utilisateur, il est procédé à l'identification des objets activables présents dans ladite au moins une interface graphique alors affichée, et pour chaque objet activable il est procédé à:
- l'identification d'une donnée descriptive comprenant une donnée visuelle également désignée donnée de localisation et une donnée textuelle de l'objet activable, la donnée visuelle de l'objet activable servant à la localisation de l'objet dans l'écran 1a d'affichage,
- l'enregistrement des données descriptives de chaque objet activable dans ladite au moins une base de données 4,
- la génération de données phonétiques numérisées sur la base de la donnée textuelle de chaque objet activable,
- l'enregistrement des données phonétiques numérisées de chaque objet activable dans ladite au moins une base de données.

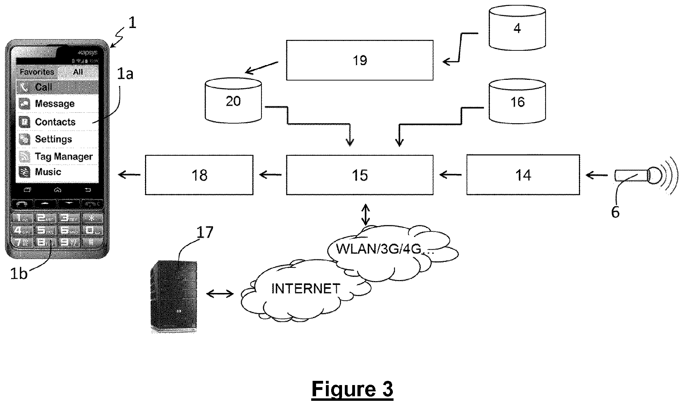

Dans le mode de réalisation de la figure 1, il existe au moins deux bases de données dont seule est visible la base de données 4 d'enregistrement des données descriptives. La deuxième base de données relative à l'enregistrement des données phonétiques numérisées sera montrée à la figure 3 sous la forme d'un module de contexte dynamique 20.

Dans le deuxième groupe d'étapes réalisant la commande vocale proprement dite, suite à la capture de l'ordre vocal, il est procédé à :
- la numérisation de l'ordre vocal en un ordre vocal numérique,
- la comparaison de l'ordre vocal numérique avec les données phonétiques numérisées sauvegardées,
- l'identification d'une donnée phonétique numérisée sauvegardée correspondante à l'ordre vocal numérique et récupération de la donnée de localisation associée à la donnée phonétique numérisée,
- l'activation de l'objet associé à la localisation récupérée.

Il en va de même pour le procédé selon l'invention de commande par un ordre vocal émis par l'utilisateur d'une application logicielle exécutée sur un terminal 1 utilisateur, ce procédé reprenant les étapes précédemment mentionnées.

Selon ce procédé, les objets activables permettent par exemple la navigation entre différentes interfaces graphiques utilisateurs, l'édition d'au moins un texte dans une des interfaces graphiques utilisateurs ou sont relatifs à la commande d'une fonction du terminal 1 utilisateur, ceci en plus des fonctions de base du terminal 1 utilisateur qui sont pour un téléphone l'appel et la composition de l'appel ou la réponse à un appel.

En regard de la figure 1, le terminal 1 utilisateur peut comprendre une interface homme machine de vocalisation 2, ci-après dénommée interface de vocalisation 2 et une interface homme machine d'activation par commande vocale 3 du terminal 1, ci-après dénommée interface par commande vocale 3. L'interface de vocalisation 2 sera mieux vue à la figure 2 et l'interface par commande vocale 3 sera mieux vue à la figure 3.

Les deux interfaces de vocalisation 2 et par commande vocale 3 présentent une partie logicielle intégrée directement au système d'exploitation du terminal 1 utilisateur et intègrent aussi des éléments déjà avantageusement présents sur le terminal utilisateur. L'interface de vocalisation 2 peut ainsi comprendre un haut-parleur 5 et l'interface par commande vocale 3 un microphone comme moyen de capture 6 de l'ordre vocal, le haut-parleur 5 et le microphone 6 pouvant être déjà présents sur le terminal 1 utilisateur dans sa version initiale ou native, ce qui est fréquemment le cas.

En ce qui concerne la partie logicielle, les deux interfaces 2, 3 peuvent communiquer entre elles avec au moins une base de données 4 qui leur est commune. Cette première base de données 4 est avantageusement celle qui mémorise les données descriptives des objets activables précédemment mentionnés.

Avantageusement, l'interface de vocalisation 2 transmet des données à la base 4 tandis que l'interface par commande vocale 3 reçoit des données de la base 4. Il peut cependant être prévu une communication dans les deux sens de la base de données 4 avec chacune des interfaces 2, 3 ou une des interfaces 2 ou 3.

Les données descriptives collectées sont formées de deux types de données. Le premier type de données est formé par des informations structurelles ou visuelles sur les objets graphiques affichés par le terminal 1 utilisateur permettant de localiser les objets activables sur l'écran 1a du terminal 1 utilisateur. Le second type de données ou données textuelles est le contenu textuel associé à chacun de ces objets activables.

D'une manière générale, l'interface de vocalisation 2 permet de transmettre des informations relatives à l'affichage sur ledit au moins un écran 1a du terminal 1 utilisateur à son utilisateur, notamment la localisation d'un objet activable sur l'écran 1a par une donnée visuelle de localisation (également désignée donnée de localisation) et le nom de l'objet activable par une donnée textuelle, les données visuelles de localisation et textuelles formant les données descriptives des objets activables. L'interface par commande vocale 3 du terminal 1 utilisateur permet quant à elle à l'utilisateur de commander le fonctionnement du terminal 1 par ordre vocal.

L'interface par commande vocale 3 est un élément essentiel pour le procédé et le terminal 1 utilisateur conformément à la présente invention tandis que l'interface de vocalisation 2 qui va être décrite est un élément préférentiel de la présente invention. L'interface par commande vocale 3 peut en effet fonctionner avec un autre élément que cette interface de vocalisation 2 pourvu que ladite au moins une base de données 4 présente les données suffisantes pour le fonctionnement de l'interface par commande vocale 3, c'est-à-dire les données descriptives précédemment mentionnées, les données textuelles de ces données descriptives devant être phonétisées et numérisées préalablement à une reconnaissance vocale.

Dans un mode de réalisation non limitatif de la présente invention, l'interface de vocalisation 2 permet d'effectuer la description de l'écran affiché sur le téléphone, afin que l'utilisateur prenne connaissance de la localisation des divers objets activables graphiques, sous forme de touches virtuelles, de flèches, d'icônes etc..., qu'affiche l'écran 1a du terminal 1 utilisateur.

La figure 2 montre un mode de réalisation de l'interface de vocalisation 2. D'une manière générale, trois grandes catégories d'objets graphiques sont susceptibles de cohabiter sur un écran 1a d'un terminal 1 utilisateur.

La première catégorie regroupe les objets statiques en charge de la présentation d'un texte donné.

La deuxième catégorie regroupe les objets activables destinés à lancer une action ou modifier l'état d'une variable, par exemple des touches ou boutons virtuels, notamment les chiffres de 0 à 9 ainsi que les lettres de A à Z plus les symboles * et #, des listes, des icônes, etc.

La troisième catégorie regroupe les objets éditables qui permettent à l'utilisateur d'entrer ou de modifier un texte.

Dans ce mode de réalisation, l'objectif de cette interface de vocalisation 2 est de décrire de façon vocale le contenu de l'écran affiché par le terminal 1 utilisateur à l'intention de l'utilisateur. Au cours de cette description, au moins une base de données 4 enregistre au moins les données descriptives des objets activables, les données de cette base de données 4 servant ultérieurement à l'interface par commande vocale 3 pour la commande vocale du terminal 1 utilisateur, ceci après traitement phonétique.

En plus du nom de chaque objet activable, il peut être mémorisé la localisation absolue d'un objet graphique affiché à l'écran 1a du terminal 1 utilisateur et sa nature activable ou non-activable.

En regard de la figure 2, dans un mode de réalisation non limitatif, l'interface de vocalisation 2, contenue dans le terminal 1 utilisateur, présente en amont un collecteur 7 d'informations d'affichage de l'écran 1a du terminal 1 utilisateur relatif aux objets graphiques affichés à l'écran 1a. Ce collecteur 7 intercepte les opérations d'affichage sur l'écran 1a du terminal 1 utilisateur par les applications opérant dans le terminal 1, directement dans le système d'exploitation du terminal 1 utilisateur. Les textes affichés ainsi que le type et la localisation de chaque objet activable sur l'écran sont collectés en formant les données descriptives, les objets activables provenant essentiellement des deux dernières catégories précédemment mentionnées.

Après le collecteur 7, se trouve un analyseur syntaxique 8. Cet analyseur 8 collecte et mémorise les données descriptives liées à différents objets graphiques activables qui sont ensuite enregistrées au sein d'une base de données 4. Ce sont ces données descriptives qui seront utilisées plus tard par l'interface par commande vocale comme il sera ultérieurement décrit.

L'analyseur syntaxique 8 fournit des textes ou données textuelles relatifs respectivement à chaque objet activable, ces textes ou données textuelles étant associés dans les données descriptives avec des données visuelles servant à la localisation de l'objet activable sur l'écran 1a du terminal 1 utilisateur.

Parallèlement à l'enregistrement dans la base de données 4, les données descriptives respectives pour chaque objet activable sont filtrées dans un module de filtrage 9, afin d'éliminer les données indésirables ou répétitives. Ce module de filtrage 9 travaille en association avec un historique 12 de données déjà émises afin d'effectuer ce filtrage.

Les données descriptives sont ensuite avantageusement réordonnées dans un module d'ordonnancement 10. En effet, lors de l'affichage d'une fenêtre à l'écran 1a du terminal 1 utilisateur, l'ordre dans lequel les différents objets graphiques qui composent cette fenêtre sont affichés à l'écran 1a n'est pas toujours représentatif de leur position géographique dans cette fenêtre. Le module d'ordonnancement 10 est donc en charge d'ordonner les données relatives à des objets graphiques en prenant en compte leur position les uns par rapport aux autres, par exemple de haut en bas et de gauche à droite.

Les données descriptives réordonnées sont ensuite complétées dans un mode de complément 11 afin que les données textuelles qu'elles contiennent soient compréhensibles et complètes pour l'utilisateur du terminal 1 utilisateur. Un tel module est en charge de « l'habillage » final du texte à prononcer. Cela peut se traduire par exemple par l'ajout du mot fenêtre dans le texte afin de renseigner l'utilisateur sur la nature de l'objet activable sélectionné faisant partie d'une des trois catégories précédemment mentionnées.

Il est ainsi obtenu une suite de textes ordonnés et formatés qui est destinée à être présentée vocalement à l'utilisateur. Les textes ainsi complétés sont transmis à un vocalisateur 13 qui les met sous forme de sons audibles et compréhensibles pour un utilisateur et les transmet à un haut-parleur 5. Il est à noter qu'en fonction des types de terminaux 1 utilisateurs, cette fonction peut être déjà présente sur le terminal 1 en tant que fonction native. Si ce n'est pas le cas, il est possible d'ajouter un tel vocalisateur 13 au terminal 1 utilisateur.

Dans le cas particulier d'un objet activable ne comprenant pas de texte, un champ spécifique dit d'accessibilité est créé pour ce type d'objet. Ce champ spécifique permet la vocalisation des objets purement graphiques. Ce champ spécifique est renseigné lors du codage de l'application.

En parallèle à la présentation à l'utilisateur, les textes ainsi complétés peuvent être transmis à l'historique 12 afin de pouvoir compléter et réactualiser cet historique 12 servant aussi à l'élimination des textes redondants dans le module de filtrage 9.

La figure 3 montre une forme de réalisation de l'interface par commande vocale 3 selon la présente invention. L'objectif de cette interface 3 est de permettre à l'utilisateur de naviguer par la voix à l'intérieur de l'écran 1a affiché par le terminal 1 utilisateur. L'ensemble des actions possibles peut avoir été recensé lors de la phase de description de l'écran par une interface homme machine de vocalisation, comme il a été montré à la figure 2 mais ceci n'est pas limitatif, un autre recensement pouvant aussi avoir eu lieu.

A ces actions possibles recensées est ajouté un ensemble de mots clés spécifiques au contenu de l'écran 1a affiché sur le terminal 1 utilisateur. Après la phase de reconnaissance vocale, l'action sur l'objet activable souhaité est effectuée.

En partant d'un moyen de capture 6 de l'ordre vocal de l'utilisateur qui est avantageusement sous la forme d'un microphone 6 permettant à l'utilisateur d'énoncer son ordre vocal, l'interface par commande vocale 3 comprend un module d'acquisition 14. Ce module d'acquisition 14 est en charge de transformer le signal analogique audio capturé par le microphone 6, associé au terminal 1 utilisateur et avantageusement intégré au terminal 1 utilisateur, en données numériques utilisables ultérieurement par un module de reconnaissance vocale 15 qui suit le module d'acquisition 14. Cette fonction de transformation en données numériques est en général intégrée de façon native sur la plupart des terminaux 1 utilisateurs. Elle fournit ainsi des données numériques générées en fonction de données phonétiques reçues. Ces données numériques sont également désignées ordre vocal numérique dans la suite de la description.

Pour la reconnaissance vocale se faisant dans le module 15, la figure 3 montre deux modes de réalisation alternatifs qui peuvent cependant être aussi combinés.

Dans le premier mode, il est utilisé des données phonétiques numérisées à partir d'un générateur de contexte 19. Les données qui parviennent de la base de données mémorisant les données phonétiques numérisées, cette base étant sous la forme du module de contexte dynamique 20, sont des données phonétiques numérisées à partir de la donnée textuelle pour chaque objet activable. Les données textuelles proviennent des données descriptives ayant été par exemple collectées par un analyseur syntaxique tel que décrit en regard de la figure 2.

Il peut donc exister avantageusement une première base de données 4 qui collecte les données descriptives dans l'interface de vocalisation montrée à la figure 2. Cette première base de données 4 peut être commune à l'interface de vocalisation et l'interface par commande vocale 3. Il peut aussi exister une deuxième base de données, sous la forme du module de contexte dynamique 20 qui se trouve entre le générateur de contexte 19 et le module de reconnaissance vocale 15, cette base de données 20 recueillant les données textuelles phonétiques.

Le module de reconnaissance vocale 15 travaillant sur des modèles phonétiques, le générateur de contexte 19 collecte les textes associés aux objets activables transformées en données phonétiques. Pour des raisons de réactivité à la demande de l'émission d'un ordre vocal, ce qui peut être fait par exemple par un moyen de sélection de la commande du terminal 1 utilisateur, notamment par appui sur un bouton réalisant ce moyen de sélection, la transcription en données phonétiques est déclenchée systématiquement à chaque affichage d'une nouvelle page ou d'une nouvelle interface sur l'écran 1a du terminal 1 utilisateur.

Parallèlement au générateur de contexte 19 et au module de contexte dynamique, il est prévu un module de contexte statique 16. Ce module comprend une liste de mots clés en relation respective avec un objet activable. Ces données peuvent permettre la navigation d'objet activable en objet activable ou la caractérisation d'un objet activable particulier. Une liste illustrative et non limitative de mots clés peut être : « suivant », « précédent », « éditer », « effacer », « sélectionner », « appuyer » etc. D'une manière générale, ces mots clefs sont indépendants du contexte. Qu'elle que soit l'interface affichée, il est toujours possible de déclencher les actions associés aux mots clés du contexte statique.

Le module de contexte statique comprend aussi des données numériques correspondant à la numérisation de données phonétiques des commandes génériques. Ces commandes génériques sont par exemple: Ecran d'accueil, Menu et Retour etc. ainsi que les contextes des mots clés tels que : Quelle heure est-il ? Niveau de batterie ? Où suis-je ? etc.

Ces données peuvent ainsi être pré-chargées dans le module de contexte statique.

Dans une forme de réalisation de l'émission d'un ordre de commande par l'utilisateur, l'ordre vocal donné peut désigner par exemple un objet activable et l'action qui doit être effectuée sur cet objet activable. Le texte de l'ordre vocal peut comprendre donc une partie phonétique relative à l'objet activable qui sera comparée à une partie phonétique caractérisant cet objet activable et ayant été introduite dans le générateur de contexte 19 à partir de la base de données sous forme du module de contexte dynamique 20 mémorisant les données phonétiques.

Le texte de l'ordre vocal émis par l'utilisateur peut comprendre aussi une partie phonétique relative à l'action à effectuer sur l'objet activable qui peut ne pas avoir été renseignée dans le générateur de contexte 19 car ne concernant pas directement un objet activable affiché sur l'écran 1a du terminal 1 utilisateur mais la commande proprement dite de l'objet activable. Cette partie phonétique dite de commande peut alors être cependant présente en tant que mot clé ou mot standard dans le module de contexte statique 16.

Ceci n'est pas toujours le cas étant donné que pour certains objets graphiques activables, la commande à exercer sur eux pour leur activation est évidente. Par exemple, l'objet activable symbolisant la touche appel sur un écran 1a de téléphone en tant que terminal 1 utilisateur ne peut servir qu'à lancer un appel et son mode d'activation est donc unique et évident.

Si les données numériques générées sur la base des données phonétiques parvenant au module d'acquisition 14 par le microphone 6 sont similaires, d'une part, aux données phonétiques numérisées associées à un objet activable spécifique que lui transmet le générateur de contexte 19 et, d'autre part, à un mot clé phonétique numérisé que lui transmet le module de contexte statique 16, le module de reconnaissance vocale 15 reconnaît quel objet est à activer et, le cas échéant, quelle action entreprendre sur l'objet quand cette action n'est pas évidente.

Le nombre de mots clés contenus dans le module de contexte statique 16 ou les capacités de mémorisation du module de contexte dynamique 20 et de transformation du générateur de contexte 19 sont forcément limités, étant donné qu'ils sont présents dans le terminal 1 utilisateur ne disposant que d'une taille réduite. Ainsi, ce premier mode de réalisation ne permet pas d'éditer de longs textes sur le terminal 1 utilisateur.

Pour pallier cet inconvénient, il peut être prévu un deuxième mode de réalisation de reconnaissance vocale plus performant, permettant par exemple la saisie de phrases complètes pouvant être affichées sur le terminal 1 utilisateur lors d'un ordre d'édition, ceci toujours par commande vocale de l'utilisateur.

Dans ce deuxième mode de réalisation, comme une reconnaissance en langage naturel de phrases nécessite d'importantes ressources matérielles, par exemple en ce qui concerne la fréquence des microprocesseurs, les tailles des mémoires et les bases de données contextuelles, les ressources requises par une telle reconnaissance ne sont généralement disponibles sur le terminal 1 utilisateur. L'édition de texte à partir de données phonétiques numérisées est alors sous-traitée à un serveur 17 distant, réalisant ainsi une base de données auxiliaire, par exemple la troisième base de données quand le terminal 1 utilisateur comprend deux bases de données 4, 20, c'est-à-dire la base de données 4 pour les données descriptives et la base de données formée par le module de contexte dynamique 20 pour la mémorisation des données textuelles phonétiques numérisées. Le serveur 17 intègre alors la base de données auxiliaire.

Dans ce deuxième mode de réalisation, les données numériques issues du module d'acquisition 14 sont envoyées à un serveur 17 via un réseau informatique par exemple WiFi, WLAN en général, 3G ou 4G à partir du module de reconnaissance vocale 15. Après traitement et reconnaissance, les données textuelles sont renvoyées par le serveur 17 via ce même réseau au module de reconnaissance vocale 15.

Ceci est particulièrement pertinent lors d'une édition impliquant une reconnaissance en langage naturel, les données phonétiques numérisées chacune sur la base d'une donnée descriptive respective étant alors trop importantes pour être traitées dans le terminal 1 utilisateur. Selon ce deuxième mode, ces données sont traitées à distance du terminal 1 utilisateur par le serveur 17 présentant plus de capacités de traitement.

Dans ce deuxième mode, il peut être possible de corriger un ordre vocal de l'utilisateur ne correspondant pas exactement à un mot clé contenu dans le module de contexte 16, le serveur 17 remplaçant la partie ordre énoncée par l'utilisateur par un synonyme ou par un complément qui peut être reconnu par la reconnaissance vocale.

Les deux modes de réalisation précédemment illustrés peuvent aussi être associés, le premier mode étant actif pour des opérations de commande vocale simples et le deuxième mode pour des opérations de commande plus compliquées, par exemple lors d'édition de phrases.

Pour ces deux modes de réalisation, le dernier module de l'interface par commande vocale 3 s'interfaçant directement avec le système d'exploitation du terminal 1 utilisateur est un analyseur d'activation 18. Cet analyseur d'activation 18 est en charge de mettre en oeuvre l'action identifiée durant la phase de reconnaissance vocale. Il s'interface à très bas niveau avec le système d'exploitation du terminal 1 utilisateur et simule une action physique de l'utilisateur, par exemple une sélection à l'écran d'un objet activable puis son activation.

L'activation de l'objet est faite par l'analyseur d'activation 18 directement dans le système d'exploitation du terminal 1 utilisateur en remplacement de l'activation de l'objet graphique affiché sur l'écran 1a du terminal 1 utilisateur, activation qui aurait pu être effectuée manuellement par l'utilisateur.

Avantageusement, le terminal 1 utilisateur peut comprendre un moyen de sélection permettant de mettre en oeuvre soit un mode d'activation tactile par au moins un écran 1a d'affichage d'interfaces graphiques utilisateurs ou soit un mode d'activation par commande vocale, comme il a été précédemment décrit. Ledit au moins un écran 1a d'affichage est le plus fréquemment un écran 1a tactile, ceci étant particulièrement valable quand le terminal 1 utilisateur est un téléphone.

Pour le terminal 1 utilisateur, il peut aussi être prévu des interfaces homme machine matérielles 1b, visibles aux figures 1 à 3, sous la forme de boutons, touches ou analogues. Dans ce cas, le moyen de sélection prévu sur le terminal 1 utilisateur peut permettre d'opérer sélectivement la commande vocale, de rendre opérationnelle la fonction tactile de l'écran 1a d'affichage d'interfaces graphiques utilisateurs ou la fonction des interfaces homme machine matérielles 1b.

Un exemple non limitatif de commande vocale va être maintenant donné en regard des figures 1 à 3 de la présente invention pour un téléphone en tant que terminal 1 utilisateur. A partir de l'écran 1a du téléphone 1, lors d'un affichage de cet écran, l'interface de vocalisation 2 est activée et commence l'énumération permettant de localiser le positionnement de divers éléments présents sur le téléphone, par exemple:
- « Ecran Téléphone »,
- « bouton 'Option', suivi de Editeur 'Entrer un nom ou un numéro', suivi de bouton 'Effacer' »,
- « dessous : clavier alpha numérique »,
- « dessous : bouton 'Clavier' suivi de bouton 'Appeler' suivi de bouton 'Micro' »
- « dessous : menu, item 'Téléphone' actif, suivi de 'Contact', suivi de 'Groupe', suivi de 'Historique des appels' »

Les mots entre guillemets simples " correspondant sensiblement à des ordres ou ne concernant pas directement des objets activables affichés sur l'écran 1a peuvent être collectés dans le module de contexte statique 16. Certains de ces mots peuvent maintenant faire partie des « ordres vocaux » que l'utilisateur pourra entrer par la voix pour l'activation vocale du téléphone 1.

Comme autre exemple, la présence de l'objet « éditeur » ajoute au module de contexte statique 16 le mot clé 'Editer'. Les mots clés génériques 'Suivant', 'Précédent', 'Terminer', 'Quitter' peuvent aussi être ajoutés ainsi que ceux nécessaires à la consultation de la barre d'icônes située en haut de l'écran : par exemple 'état connexion', 'niveau de batterie', 'quelle heure est-il'.

Pour utiliser la commande vocale, l'utilisateur appuie sur le moyen de sélection dédié pour démarrer la reconnaissance vocale 15 et prononce 'Contact'. L'interface par commande vocale 3 reconnaît ce mot clé qui est associé à un des objets du menu décrit précédemment. Un événement similaire à celui provoqué par l'appui physique sur l'objet 'Contact' du menu est alors généré par la commande vocale.

Le résultat de cette action provoque l'affichage de l'écran suivant. Une nouvelle énumération commence alors, par exemple :
- « Ecran Contact »,
- « bouton 'Annuaire', suivi de bouton 'Recherche', suivi de bouton 'Ajouter', suivi de bouton 'Menu' »,
- « dessous : Editeur 'Rechercher les contacts, suivi de bouton 'micro' »,
- « dessous : liste, 1 sur 2 »,
- « dessous menu, objet 'Téléphone', suivi de 'Contact' actif, suivi de 'Groupe', suivi de 'Historique des appels'».

Ainsi, il est possible à l'utilisateur de naviguer entre les objets graphiques sans se servir de ses mains.

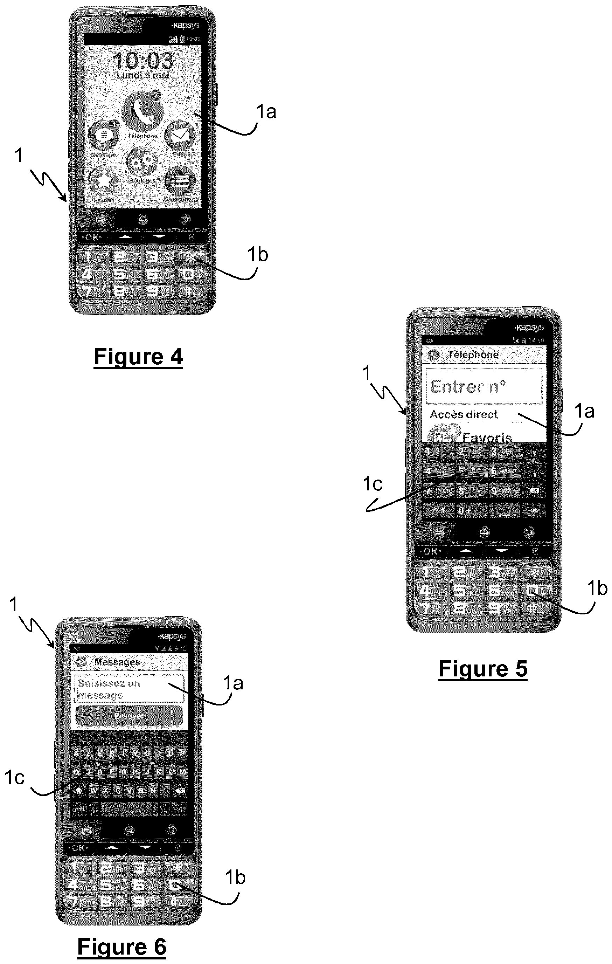

Selon un mode particulièrement avantageux de l'invention et illustré sur les figures 4 à 6 le terminal utilisateur comporte à la fois : un écran tactile 1a, un clavier à touches 1b et une interface pour commande vocale. Le clavier à touches 1b comprend au moins une touche matérielle pour chaque chiffre du 0 au 9. Il comprend également d'autres touches telles que les touches « étoile » ou « dièse » par exemple. Un clavier virtuel 1c apparaît en figure 5 et 6. Ce clavier virtuel 1c peut comporter les 10 chiffres arabes comme illustré en figure 5 et/ou comporter les 26 lettres de l'alphabet comme illustré en figure 6. Le terminal 1 est configuré de manière à ce que chaque objet activable affiché par sur l'écran puisse être activé par l'un quelconque parmi l'écran tactile 1a, le clavier à touches 1b et l'interface pour commande vocale si elle est présente. A chaque instant, ces trois modes de commande sont disponibles et l'utilisateur peut choisir celui qu'il souhaite.

L'invention n'est nullement limitée aux modes de réalisation décrits et illustrés qui n'ont été donnés qu'à titre d'exemples et s'étend à tous les modes de réalisation couverts par les revendications.

### REFERENCES

- 1.: Terminal utilisateur
- 1a.: Ecran
- 1b.: Interface homme machine matérielle
- 2.: Interface homme machine de vocalisation
- 3.: Interface par commande vocale
- 4.: Base de données
- 5.: Haut-parleur
- 6.: Moyen de capture
- 7.: Collecteur
- 8.: Analyseur syntaxique
- 9.: Module de filtrage
- 10.: Module d'ordonnancement
- 11.: Module de complément
- 12.: Historique
- 13.: Vocalisateur
- 14.: Module d'acquisition
- 15.: Module de reconnaissance vocale
- 16.: Module de contexte statique
- 17.: Serveur
- 18.: Analyseur d'activation
- 19.: Générateur de contexte
- 20.: Module de contexte dynamique

## Revendications

1. Terminal (1) utilisateur comprenant au moins un écran (1a) d'affichage d'interfaces graphiques utilisateurs, un système d'exploitation, au moins un moyen de capture (6) d'un ordre vocal émis par l'utilisateur pour la commande d'un objet activable du terminal (1) utilisateur, au moins une mémoire pour mémoriser au moins une base de données (4, 17, 20) de commande, **caractérisé en ce que** le terminal (1) utilisateur est configuré pour exécuter les étapes suivantes :
• d'une part, à chaque affichage d'au moins une interface graphique sur l'écran (1a) du terminal (1) utilisateur, identification des objets activables présents dans ladite au moins une interface graphique alors affichée, et pour chaque objet activable :
- identification d'une donnée descriptive comprenant une donnée de localisation et une donnée textuelle de l'objet activable, la donnée de localisation de l'objet activable permettant la localisation de l'objet dans l'écran (1a),
- enregistrement des données descriptives pour chaque objet activable dans ladite au moins une base de données (4, 17, 20),
- génération de données phonétiques numérisées sur la base de la donnée textuelle de chaque objet activable,
- enregistrement dans ladite au moins une base de données (4, 17, 20) des données phonétiques numérisées de chaque objet activable,
• d'autre part, suite à la capture de l'ordre vocal :
- numérisation de l'ordre vocal reçu par le moyen de capture (6) pour la commande d'un objet activable en un ordre vocal numérique,
- comparaison dudit ordre vocal numérique avec lesdites données phonétiques numérisées enregistrées,
- identification d'une donnée phonétique numérisée enregistrée correspondant à l'ordre vocal numérique et récupération de la donnée de localisation associée à ladite donnée phonétique numérisée identifiée,
- activation de l'objet activable associé à la localisation récupérée.

2. Terminal (1) utilisateur selon la revendication précédente, pour lequel la capture de l'ordre vocal est faite par une interface homme machine par commande vocale (3), ladite interface par commande vocale (3) étant connectée au système d'exploitation du terminal (1) utilisateur afin d'effectuer l'activation de l'objet associé et pour lequel l'interface par commande vocale (3) comprend deux bases de données (4, 20), une première base de données (4) mémorisant les données descriptives et une deuxième base de données (20) mémorisant les données phonétiques numérisées en étant sous la forme d'un module de contexte dynamique.

3. Terminal (1) utilisateur selon la revendication précédente, pour lequel l'interface par commande vocale (3) est connectée à une troisième base de données placée à distance de cette interface par commande vocale (3) et pour lequel la troisième base de données est associée à un serveur (17) qui communique avec l'interface par commande vocale (3) via un réseau sans fil.

4. Terminal (1) utilisateur selon l'une quelconque des deux revendications précédentes, pour lequel la comparaison de l'ordre vocal numérique avec les données phonétiques numérisées sauvegardées ainsi que l'identification d'une donnée phonétique numérisée sauvegardée dans l'interface par commande vocale (3) est faite par un module de reconnaissance vocale (15) et la génération d'une donnée phonétique numérisée sur la base de la donnée textuelle est faite par un générateur de contexte (19), le module de reconnaissance vocale (15) et le générateur de contexte (19) étant incorporés dans l'interface par commande vocale (3).

5. Terminal (1) utilisateur selon la revendication précédente, pour lequel l'interface par commande vocale (3) comprend un module de contexte statique (16) regroupant les mots clés relatifs respectivement à au moins l'un des objets activables, ledit module de contexte statique (16) étant configuré pour transmettre les mots clés au module de reconnaissance vocale (15).

6. Terminal (1) utilisateur selon l'une quelconque des quatre revendications précédentes, configuré pour que l'activation de l'objet soit effectuée par un analyseur d'activation (18) en remplacement de l'activation directe de l'objet activable sur l'écran (1a) du terminal (1) utilisateur.

7. Terminal (1) utilisateur selon l'une quelconque des revendications 4 ou 5, pour lequel le moyen de capture de l'ordre vocal est un microphone (6) analogique, un module d'acquisition (14) numérisant les signaux du microphone (6) étant prévu dans l'interface par commande vocale (3) entre le microphone (6) et le module de reconnaissance vocale (15).

8. Terminal (1) utilisateur selon l'une quelconque des revendications précédentes, lequel comprend une interface homme machine de vocalisation (2), cette interface de vocalisation (2) étant connectée au système d'exploitation du terminal utilisateur (1) et pour lequel l'interface de vocalisation (2) comprend un collecteur (7) configuré pour transmettre les données du système d'exploitation à un analyseur syntaxique (8) pour l'identification des données descriptives pour chaque objet activable, au moins une base de données (4) mémorisant les données descriptives étant intégrée dans l'interface de vocalisation (2).

9. Terminal (1) utilisateur selon la revendication précédente, pour lequel l'interface de vocalisation (2) comprend au moins un des modules suivants : un module de filtrage (9) des données textuelles associées à un objet activable configuré pour supprimer les données textuelles déjà présentes dans un historique (12) de textes, un module d'ordonnancement (10) des données textuelles selon un ordre prédéterminé, un module de complément (11) apte à apporter pour chaque donnée textuelle un complément de texte.

10. Terminal (1) utilisateur selon l'une quelconque des deux revendications précédentes, pour lequel l'interface de vocalisation (2) comprend un vocalisateur (13) préparant la donnée textuelle spécifique à chaque objet activable à une diffusion et un haut-parleur (5) diffusant les données textuelles à destination de l'utilisateur et comprend un moyen de sélection configuré pour mettre en oeuvre soit un mode d'activation par ledit au moins un écran d'affichage (1a) d'interfaces graphiques utilisateurs ou soit un mode d'activation par commande vocale.

11. Terminal (1) utilisateur selon la revendication précédente, pour lequel il est prévu des interfaces homme machine matérielles (1b) sous la forme de boutons, touches ou moyens analogues, le moyen de sélection permettant de mettre en opération sélectivement la commande vocale, l'écran (1a) d'affichage d'interfaces graphiques utilisateurs ou les interfaces homme machine matérielles (1b).

12. Terminal (1) utilisateur selon l'une quelconque des revendications précédentes, comprenant un écran tactile (1a) et un clavier à touches (1b) intégrés au terminal (1) de manière inamovible, le terminal (1) étant configuré de manière à ce que chaque objet activable puisse être activé par l'un quelconque parmi : l'écran tactile, le clavier à touches et l'interface pour commande vocale.

13. Procédé de commande par un ordre vocal émis par l'utilisateur d'une application logicielle exécutée sur un terminal (1) utilisateur, le terminal utilisateur (1) étant muni d'un écran apte à afficher des interfaces graphiques utilisateurs, le procédé étant **caractérisé en ce qu'**il comprend les étapes suivantes exécutées de manière informatisée par au moins un microprocesseur:
• d'une part, à chaque affichage d'une interface graphique sur l'écran (1a) du terminal (1) utilisateur: identification des objets activables présents dans l'interface graphique alors affichée, les objets activables permettant le pilotage de l'application logicielle par l'utilisateur, et pour chaque objet activable :
- identification d'une donnée descriptive comprenant une donnée de localisation et une donnée textuelle de l'objet activable, la donnée de localisation de l'objet activable servant à la localisation de l'objet dans l'écran (1a),
- enregistrement des données descriptives pour chaque objet activable,
- génération de données phonétiques numérisées sur la base de la donnée textuelle de chaque objet activable,
- enregistrement des données phonétiques numérisées de chaque objet activable,
• d'autre part, suite à la capture de l'ordre vocal :
- numérisation de l'ordre vocal en un ordre vocal numérique,
- comparaison de l'ordre vocal numérique avec les données phonétiques numérisées sauvegardées,
- identification d'une donnée phonétique numérisée sauvegardée correspondante à l'ordre vocal numérique et récupération de la donnée de localisation associée à la donnée phonétique numérisée identifiée,
- activation de l'objet associé à la localisation récupérée.

14. Procédé selon la revendication précédente, pour lequel les objets activables permettent la navigation entre différentes interfaces graphiques utilisateurs, l'édition d'au moins un texte dans une des interfaces graphiques utilisateurs ou sont relatifs à la commande d'une fonction du terminal (1) utilisateur.

15. Produit programme d'ordinateur lisible par un ordinateur comprenant des instructions, qui lorsqu'elles sont effectuées par au moins un processeur, exécute les étapes du procédé selon l'une quelconque des revendications 13 et 14.

## Patentansprüche

1. Benutzerendgerät (1), das mindestens einen Anzeigebildschirm (1a) grafischer Benutzeroberflächen, ein Betriebssystem, mindestens ein Erfassungsmittel (6) eines Sprachbefehls, der von dem Benutzer zum Steuern eines betätigbaren Objekts des Benutzerendgeräts (1) ausgegeben wird, mindestens einen Speicher zum Speichern mindestens einer Steuerdatenbank (4, 17, 20) umfasst, **dadurch gekennzeichnet, dass** das Benutzerendgerät (1) konfiguriert ist, um die folgenden Schritte auszuführen:
• einerseits, bei jeder Anzeige mindestens einer grafischen Benutzeroberfläche auf dem Bildschirm (1a) des Benutzerendgeräts (1), Identifikation der aktivierbaren Objekte, die in der mindestens einen grafischen Benutzeroberfläche, die gerade angezeigt ist, gegenwärtig sind, und für jedes aktivierbare Objekt:
- Identifikation einer beschreibenden Information, die eine Lokalisierungsinformation und eine Textinformation des aktivierbaren Objekts umfasst, wobei die Lokalisierungsinformation des aktivierbaren Objekts das Lokalisieren des Objekts in dem Bildschirm (1a) erlaubt,
- Aufzeichnen der beschreibenden Daten für jedes aktivierbare Objekt in der mindestens einen Datenbank (4, 17, 20),
- Erzeugen digitalisierter phonetischer Daten auf der Grundlage der Textinformation jedes aktivierbaren Objekts,
- Aufzeichnen in der mindestens einen Datenbank (4, 17, 20) der digitalisierten phonetischen Daten jedes aktivierbaren Objekts,
• andererseits, im Anschluss an das Erfassen des Sprachbefehls:
- Digitalisieren des Sprachbefehls, der von dem Erfassungsmittel (6) empfangen wird, in einen digitalen Sprachbefehl zum Steuern eines aktivierbaren Objekts,
- Vergleichen des digitalen Sprachbefehls mit den aufgezeichneten digitalisierten phonetischen Daten,
- Identifikation einer aufgezeichneten digitalisierten phonetischen Information, die dem digitalen Sprachbefehl entspricht, und Abrufen der Lokalisierungsinformation, die mit den identifizierten digitalisierten phonetischen Information assozüert ist,
- Aktivieren des aktivierbaren Objekts, das mit der abgerufenen Lokalisierung assozüert ist.

2. Benutzerendgerät (1) nach dem vorhergehenden Anspruch, für das das Erfassen des Sprachbefehls durch eine Mensch-Maschinenschnittstelle-Sprachsteuerschnittstelle (3) erfolgt, wobei die Sprachsteuerschnittstelle (3) mit dem Betriebssystem des Benutzerendgeräts (1) verbunden ist, um das Aktivieren des assoziierten Objekts auszuführen, und für das die Sprachsteuerschnittstelle (3) zwei Datenbanken (4, 20) umfasst, eine erste Datenbank (4), die die beschreibenden Daten speichert, und eine zweite Datenbank (20), die die digitalisierten phonetischen Daten in der Form eines dynamischen Kontextmoduls speichert.

3. Benutzerendgerät (1) nach dem vorhergehenden Anspruch, für das die Sprachsteuerschnittstelle (3) mit einer dritten Datenbank verbunden ist, die von dieser Sprachsteuerschnittstelle (3) entfernt platziert ist, und für die die dritte Datenbank mit einem Server (17) assozüert ist, der mit der Sprachsteuerschnittstelle (3) über ein drahtloses Netzwerk kommuniziert.

4. Benutzerendgerät (1) nach einem der zwei vorhergehenden Ansprüche, für das der Vergleich des digitalen Sprachbefehls mit den gespeicherten digitalisierten phonetischen Daten sowie die Identifikation einer gespeicherten digitalisierten phonetischen Information in der Sprachsteuerschnittstelle (3) durch ein Spracherkennungsmodul (15) erfolgt, und das Erzeugen einer digitalisierten phonetischen Information auf der Basis der Textinformation durch einen Kontextgenerator (19) ausgeführt wird, wobei das Spracherkennungsmodul (15) und der Kontextgenerator (19) in die Sprachsteuerschnittstelle (3) eingebaut sind.

5. Benutzerendgerät (1) nach dem vorhergehenden Anspruch, für das die Sprachsteuerschnittstelle (3) ein statisches Kontextmodul (16) umfasst, das die Schlüsselwörter jeweils in Zusammenhang mit dem mindestens einen der aktivierbaren Objekte gruppiert, wobei das statische Kontextmodul (16) konfiguriert ist, um die Schlüsselwörter zu dem Spracherkennungsmodul (15) zu übertragen.

6. Benutzerendgerät (1) nach einem der vier vorhergehenden Ansprüche, das konfiguriert ist, damit die Aktivierung des Objekts durch einen Aktivierungsanalysator (18) unter Ersetzen der direkten Aktivierung des aktivierbaren Objekts auf dem Bildschirm (1a) des Benutzerendgeräts (1) ausgeführt wird.

7. Benutzerendgerät (1) nach einem der Ansprüche 4 oder 5, für das das Erfassungsmittel des Sprachbefehls ein analoges Mikrofon (6) ist, wobei ein Erfassungsmodul (14), das in der Sprachsteuerschnittstelle (3) zwischen dem Mikrofon (6) und dem Spracherkennungsmodul (15) vorgesehen ist, die Signale des Mikrofons (6) digitalisiert.

8. Benutzerendgerät (1) nach einem der vorhergehenden Ansprüche, das eine Vokalisations-Mensch-Maschinenschnittstelle (2) umfasst, wobei diese Vokalisationsschnittstelle (2) mit dem Betriebssystem des Benutzerendgeräts (1) verbunden ist, und für das die Vokalisationsschnittstelle (2) einen Sammler (7) umfasst, der konfiguriert ist, um die Daten des Betriebssystems zu einem Syntaxanalysator (8) zur Identifikation der beschreibenden Daten für jedes aktivierbare Objekt zu übertragen, wobei mindestens eine Datenbank (4), die in die Vokalisationsschnittstelle (2) eingebaut ist, die beschreibenden Daten speichert.

9. Benutzerendgerät (1) nach dem vorhergehenden Anspruch, für das die Vokalisationsschnittstelle (2) mindestens eines der folgenden Module umfasst: ein Filtermodul (9) der Textdaten, die mit einem aktivierbaren Objekt assozüert sind, das konfiguriert ist, um die Textdaten, die in der Historie (12) von Texten bereits gegenwärtig sind, zu löschen, ein Einreihungsmodul (10) der Textdaten gemäß einer vorbestimmten Reihenfolge, ein Ergänzungsmodul (11), das geeignet ist, um für jede Textinformation eine Textergänzung beizusteuern.

10. Benutzerendgerät (1) nach einem der zwei vorhergehenden Ansprüche, für das die Vokalisationsschnittstelle (2) einen Vokalisator (13), der die jedem aktivierbaren Objekts spezifische Textinformation auf eine Ausgabe vorbereitet, und einen Lautsprecher (5), der die Textdaten zu dem Benutzer ausgibt und ein Auswahlmittel umfasst, das konfiguriert ist, um entweder einen Aktivierungsmodus durch den mindestens einen Anzeigebildschirm (1a) grafischer Benutzeroberflächen oder durch einen Aktivierungsmodus durch Sprachsteuerung umzusetzen.

11. Benutzerendgerät (1) nach dem vorhergehenden Anspruch, für das materielle Mensch-Maschinenschnittstellen (1b) in der Form von Knöpfen, Tasten oder analogen Mitteln vorgesehen sind, wobei das Auswahlmittel ein selektives Inbetriebnehmen der Sprachsteuerung, des Anzeigebildschirms (1a) grafischer Benutzeroberflächen oder der materiellen Mensch-Maschinenschnittstelle (1b) erlaubt.

12. Benutzerendgerät (1) nach einem der vorhergehenden Ansprüche, das einen Touchscreen (1a) und eine Tastatur mit Tasten (1b), die in das Endgerät (1) fix eingebaut sind, umfasst, wobei das Endgerät (1) derart konfiguriert ist, dass jedes aktivierbare Objekt durch eines der folgenden aktiviert werden kann: durch den Touchscreen, die Tastatur mit Tasten und die Sprachsteuerschnittstelle.

13. Steuerverfahren für einen Sprachbefehl, der von dem Benutzer einer Softwareanwendung ausgegeben wird, die auf einem Benutzerendgerät (1) ausgeführt wird, wobei das Benutzerendgerät (1) mit einem Bildschirm versehen ist, der geeignet ist, um grafische Benutzeroberflächen anzuzeigen, Verfahren **dadurch gekennzeichnet, dass** es die folgenden Schritte umfasst, die auf informatisierte Art durch mindestens einen Mikroprozessor ausgeführt werden:
• einerseits, bei jeder Anzeige einer grafischen Benutzeroberfläche auf dem Bildschirm (1a) des Benutzerendgeräts (1): Identifikation der aktivierbaren Objekte, die in der grafischen Benutzeroberfläche, die gerade angezeigt wird, gegenwärtig sind, wobei die aktivierbaren Objekte das Steuern der Softwareanwendung durch den Benutzer ermöglichen, und für jedes aktivierbare Objekt:
- Identifizieren einer beschreibenden Information, die eine Lokalisierungsinformation und eine Textinformation des betätigbaren Objekts umfasst, wobei die Lokalisierungsinformation des betätigbaren Objekts zur Lokalisierung des Objekts in dem Bildschirm (1a) dient,
- Aufzeichnen der beschreibenden Daten für jedes aktivierbare Objekt,
- Erzeugen digitalisierter phonetischer Daten auf der Grundlage der Textinformation jedes aktivierbaren Objekts,
- Aufzeichnen der digitalisierten phonetischen Daten jedes aktivierbaren Objekts,
• andererseits, im Anschluss an das Erfassen des Sprachbefehls:
- Digitalisieren des Sprachbefehls in einen digitalen Sprachbefehl,
- Vergleichen des digitalen Sprachbefehls mit den gespeicherten digitalisierten phonetischen Daten,
- Identifikation einer gespeicherten digitalisierten phonetischen Information, die dem digitalen Sprachbefehl entspricht, und Abrufen der mit der identifizierten digitalisierten phonetischen Information assoziierten Lokalisierungsinformation,
- Aktivieren des aktivierbaren Objekts, das mit der abgerufenen Lokalisierung assoziiert ist.

14. Verfahren nach dem vorhergehenden Anspruch, für das die aktivierbaren Objekte die Navigation zwischen unterschiedlichen grafischen Benutzeroberflächen, das Editieren mindestens eines Texts in einer der grafischen Benutzeroberflächen erlauben oder die Steuerung einer Funktion des Benutzerendgeräts (1) betreffen.

15. Computerprogrammprodukt, das von einem Computer gelesen werden kann, das Anweisungen umfasst, die, wenn sie von mindestens einem Prozessor ausgeführt werden, die Schritte des Verfahrens nach einem der Ansprüche 13 und 14 ausführen.

## Claims

1. User terminal (1) comprising at least one screen (1a) for displaying graphic user interfaces, an operating system, at least one means (6) for capturing a vocal order emitted by the user for the control of an object of the user terminal (1) that can be activated, at least one memory for memorising at least one control database (4, 17, 20), **characterised in that** the user terminal (1) is configured to carry out the following steps:
• at each display of at least one graphic interface on the screen (1a) of the user terminal (1), identifying the objects that can be activated present in said at least one graphic interface thus displayed, and for each object that can be activated:
- identifying a piece of descriptive data comprising a piece of location data and a piece of textual data of the object that can be activated, the piece of location data of the object that can be activated allowing the object to be located in the screen (1a),
- recording of the descriptive data for each object that can be activated in said at least one database (4, 17, 20),
- generating digitised phonetic data on the basis of the piece of textual data of each object that can be activated,
- recording, in said at least one database (4, 17, 20), the digitised phonetic data of each object that can be activated,
• and after capturing the vocal order:
- digitising the vocal order received by the capture means (6) for the control of an object that can be activated into a digital vocal order,
- comparing said digital vocal order to said recorded digitised phonetic data,
- identifying a piece of recorded digitised phonetic data that corresponds to the digital vocal order and recovering the piece of location data associated with said piece of digitised phonetic data identified,
- activating the object that can be activated associated with the recovered location.

2. User terminal (1) according to the previous claim, for which the capture of the vocal order is carried out by a voice-controlled man-machine interface (3), said voice-controlled interface (3) being connected to the operating system of the user terminal (1) in order to carry out the activation of the associated object and for which the voice-controlled interface (3) comprises two databases (4, 20), a first database (4) that memorises the descriptive data and a second database (20) that memorises the digitised phonetic data while being in the form of a dynamic context module.

3. User terminal (1) according to the previous claim, for which the voice-controlled interface (3) is connected to a third database placed at a distance from this voice-controlled interface (3) and for which the third database is associated with a server (17) that communicates with the voice-controlled interface (3) via a wireless network.

4. User terminal (1) according to any one of the previous two claims, for which the comparison of the digital vocal order to the saved digitised phonetic data and the identification of a piece of saved digitised phonetic data in the voice-controlled interface (3) is carried out by a voice-recognition module (15) and the generation of a piece of digitised phonetic data on the basis of the piece of textual data is carried out by a context generator (19), the voice-recognition module (15) and the context generator (19) being incorporated into the voice-controlled interface (3).

5. User terminal (1) according to the previous claim, for which the voice-controlled interface (3) comprises a static context module (16) grouping together the keywords relating to at least one of the objects that can be activated, respectively, said static context module (16) being configured to transmit the keywords to the voice-recognition module (15).

6. User terminal (1) according to any one of the previous four claims, configured in order for the activation of the objet to be carried out by an activation analyser (18) instead of the direct activation of the object that can be activated on the screen (1a) of the user terminal (1).

7. User terminal (1) according to any one of claims 4 and 5, for which the means for capturing the vocal order is an analogue microphone (6), an acquisition module (14) that digitises the signals of the microphone (6) being provided in the voice-controlled interface (3) between the microphone (6) and the voice-recognition module (15).

8. User terminal (1) according to any one of the previous claims, comprising a vocalisation man-machine interface (2), this vocalisation interface (2) being connected to the operating system of the user terminal (1) and for which the vocalisation interface (2) comprises a collector (7) configured to transmit the data of the operating system to a syntax analyser (8) for the identification of the descriptive data for each object that can be activated, at least one database (4) that memorises the descriptive data being integrated into the vocalisation interface (2).

9. User terminal (1) according to the previous claim, for which the vocalisation interface (2) comprises at least one of the following modules: a module (9) for filtering the textual data associated with the object that can be activated, configured to delete the textual data already present in a history (12) of texts, a module (10) for ordering the textual data in a predetermined order, a supplement module (11) suitable for providing each piece of textual data with a supplemental text.

10. User terminal (1) according to any one of the previous two claims, for which the vocalisation interface (2) comprises a vocaliser (13) preparing the piece of textual data specific to each object that can be activated for broadcasting and a speaker (5) broadcasting the textual data to the user and comprises a selection means configured to implement either a mode of activation by said at least one screen (1a) for displaying graphic user interfaces or a mode of activation by voice command.

11. User terminal (1) according to the previous claim, for which physical man-machine interfaces (1b) are provided in the form of buttons, keys or equivalent means, the selection means allowing the voice control, the screen (1a) for displaying graphic user interfaces or the physical man-machine interfaces (1b) to be selectively turned on.

12. User terminal (1) according to any one of the previous claims, comprising a touch screen (1a) and a keyboard (1b) integrated into the terminal (1) in a non-removable manner, the terminal (1) being configured in such a way that each object that can be activated can be activated by any one of: the touch screen, the keyboard and the voice-control interface.

13. Method for control via a vocal order emitted by the user of a software application executed on a user terminal (1), the user terminal (1) being provided with a screen suitable for displaying graphic user interfaces, the method being **characterised in that** it comprises the following steps carried out digitally by at least one microprocessor:
- at each display of a graphic interface on the screen (1a) of the user terminal (1): identifying the objects that can be activated present in the graphic interface thus displayed, the objects that can be activated allowing the control of the software application by the user, and for each object that can be activated:
-- identifying a piece of descriptive data comprising a piece of location data and a piece of textual data of the object that can be activated, the piece of location data of the object that can be activated being used for the location of the object in the screen (1a),
-- recording of the descriptive data for each object that can be activated,
-- generating digitised phonetic data on the basis of the piece of textual data of each object that can be activated,
-- recording the digitised phonetic data of each object that can be activated,
- and after capturing the vocal order:
-- digitising the vocal order into a digital vocal order,
-- comparing the digital vocal order to the saved digitised phonetic data,
-- identifying a saved piece of digitised phonetic data that corresponds to the digital vocal order and recovering the piece of location data associated with the piece of digitised phonetic data identified,
-- activating the object associated with the recovered location.

14. Method according to the previous claim, for which the objects that can be activated allow navigation between various graphic user interfaces, the publishing of at least one text in one of the graphic user interfaces or are relative to the control of a function of the user terminal (1).

15. Computer program product that can be read by a computer, comprising instructions that, when they are carried out by at least one processor, execute the steps of the method according to any one of claims 13 and 14.
